# EUROPEAN PATENT APPLICATION

(11) **EP 2 354 907 A1**
(43) Date of publication of application: **10.08.2011**
(21) Application number: 10290014.9
(22) Date of filing: 13.01.2010
(51) Int. Cl.: G06F 3/043

(54) **Noise reduction in electronic device with touch sensitive surface**

(71) Applicant: Tyco Electronics Services GmbH, 8200 Schaffhausen (CH)
(72) Inventor: Estève Simon, 78120 Rambouillet (FR); Schevin Olivier, 75017 Paris (FR)
(74) Representative: Grünecker, Kinkeldey, Stockmair & Schwanhäusser Anwaltssozietät

(57) **Abstract**

The invention relates to an electronic device with a touch sensitive surface comprising: a sensing means for capturing an acoustic signal, a touch location determining unit configured to determine the location of a touch event on the touch sensitive surface based on the acoustic signal. To improve the reliability of the touch localisation process, the device further comprises a filtering unit configured to improve the signal-to-noise ratio of the acoustic signal based on one or more signals provided by one or more spurious acoustic signal generating devices of the electronic device and/or based on one or more parameters of the one or more spurious acoustic signal generating devices of the electronic device. The invention also relates to a corresponding method.

## Description

The invention relates to an electronic device with a touch sensitive surface comprising: a sensing means for capturing an acoustic signal, a touch location determining unit configured to determine the location of a touch event on the touch sensitive surface based on the acoustic signal. To improve the reliability of the touch localisation process, the device further comprises a filtering unit configured to improve the signal-to-noise ratio of the acoustic signal based on one or more signals provided by one or more spurious acoustic signal generating devices of the electronic device and/or based on one or more parameters of the one or more spurious acoustic signal generating devices of the electronic device. The invention also relates to a corresponding method.

Electronic devices with touch sensitive interfaces become more and more popular. To provide inputs to the electronic device, a user touches the surfaces, e.g. by a tap or a sliding action and, based on the location of the input, the electronic device carries out certain functionalities. One of the existing technologies analyses acoustic signals, which can be observed after a touch event has occurred on a surface to determine the location of the touch event. This technology has the advantage that actually any material capable of transmitting acoustic waves can be used as an interface.

However, when the haptic interface is immersed in a noisy environment, the sensors used to capture the acoustic signals of a touch event also pick up noise pollution that can decrease performances in the touch event detection and the localization of the touch event.

Prior art document US 2006/0262104 describes a system that distinguishes touch events from external noise pollutions, especially acoustic noise coming from the surrounding environment or vibrations transmitted to the haptic interface through the mechanical parts in contact with it, by analyzing the frequency spectrum of the measured signal. Signals not representing certain frequency properties will be rejected before determining a meaningless localisation. This method tends to work well when the noise pollution is not too high compared to touch events that need to be processed. When the signal-to-noise ratio becomes too low, i.e. when the amplitude of the noise pollution is in the same order of magnitude as the touch events or even higher, this method tends to be less efficient, as touch events can completely disappear inside the noise and will be no longer detected.

It is therefore the object of the present invention to provide an electronic device with a touch sensitive surface that can improve the signal quality of the acoustic signal, based on which, the localisation of a touch event will be determined.

This object is achieved with the electronic device according to claim 1 and the method according to claim 10. Accordingly, the invention relates to an electronic device with a touch sensitive surface comprising: a sensing means for capturing an acoustic signal, a touch location determining unit configured to determine the location of a touch event on the touch sensitive surface based on the acoustic signal, characterized in further comprising a filtering unit configured to improve the signal-to-noise ratio of the acoustic signal based on one or more reference signals provided by one or more spurious acoustic signal generating devices of the electronic device and/or based on one or more parameters of the one or more spurious acoustic signal generating devices of the electronic device. The invention takes advantage of the fact that, in such an electronic device, information about the properties of the noise, internal or external to the device, is already available and signals or parameters strongly correlated to the noise can be provided by the components without having to provide dedicated noise detecting devices. In contrast to the prior art, one does not discriminate between real touch events and spurious ones, but the signal quality is improved by removing, at least partially, the spurious noise contributions.

Here the term "touch event" relates to any kind of contact with the touch sensitive surface, like a tap or taps, which can be a single touch event or a multi-touch event, and/or a sliding action and/or a holding action.

Preferably, the filtering unit can comprise an adaptive filtering unit. By using an adaptive filtering unit, the noise reduction automatically adapts to changing situations in which the properties of the noise changes.

According to an advantageous embodiment, the electronic device can furthermore comprise a switching means configured to switch between the reference signals or parameters provided by the spurious acoustic signal generating devices to provide one signal to the filtering unit. Using such a switching means, it becomes possible to change the filtering such that a predominant noise contributor is taken into account to improve the signal-to-noise ratio, without however having to provide a plurality of noise contributor inputs to the filtering unit. Thus the design of the filtering unit can be kept simple.

Preferably, the electronic device can further comprise a summing means configured to sum up at least two of the reference signals of the spurious acoustic signal generating devices and/or parameters. By simply adding the summing means, a plurality of noise contributors can be taken into account by simply summing their contributions to further improve noise reduction.

Advantageously, the one or more parameters are at least one of a frequency range and associated amplitude. Based on these properties, an appropriate filtering means can be chosen to reduce the noise contribution to the acoustic signal used to determine the location of a touch event.

According to a preferred embodiment, the one or more spurious acoustic signal generating devices can be at least one of a loudspeaker, a microphone, a vibrating device, an accelerometer, a hard disk drive, a ventilator, power supply and an electronic component. These devices are thus either generating noise to the acoustic signal used to determine the localisation of an impact, thus their contribution/s need/s to be reduced, or capture the environmental noise (microphone) and can thus provide a signal representing the acoustic noise in the local environment of the electronic device.

Advantageously, the electronic device can be at least one of a mobile phone, a computer, a game console, an eBook, a MP3 player, a video player, a HiFi player and/or a navigation device. These devices all have at least one spurious acoustic signal generating device, the signal or parameter of which can be used to improve the signal to noise ratio.

Preferably, the electronic device can be a handheld device. Even in changing environments with changing noise level, which is a common situation for handheld devices, the electronic device according to the invention will be able to reduce the noise contribution based on the signals or parameters of the build-in other devices.

The invention furthermore relates to an integrated chip set comprising a filtering unit and a touch localisation unit for use in the electronic device as described above. Thus the functionality of touch localisation and the filtering unit to improve the signal can be embedded into a chip set to facilitate integration of the electronic device.

The object of the invention is also achieved with a method for improving the signal-to-noise ratio of an acoustic signal used in an electronic device to determine the location of a touch event on a touch sensitive surface, comprising the steps of: a). capturing an acoustic signal, b). determining the location of a touch event, in particular a tap or sliding action, on the touch sensitive surface based on the captured acoustic signal, characterized in further comprising a step c). of providing prior to step b). one or more spurious acoustic signal generating devices of the electronic device and/or based on one or more parameters of the one or more spurious acoustic signal generating devices of the electronic device, to improve the signal-to-noise ratio of the acoustic signal. With this method the same advantages as described above concerning the inventive electronic device can be achieved.

According to a preferred realization, step c) can comprise providing a noise reference signal using one or more signals of the one or more spurious acoustic signal generating devices of the electronic device and/or using one or more of the one or more parameters of the one or more spurious acoustic signal generating devices of the electronic device and inputting the noise reference signal into a reference input of an adaptive filtering unit to reduce the noise contribution to the captured acoustic signal. With the reference signal taking into account the contributions of a plurality of noise contributors and using an adaptive filtering unit which can change the properties of the filtering action on the acoustic signal used for the touch localisation, changing noise properties, concerning frequency and amplitude, can be easily taken into account.

Advantageously, step c) can further comprise using only one signal or parameter using a switching means. Using a switching means is a simple way to adapt the filtering to the most important noise contributor.

Preferably, step c) can further comprise summing up at least two of the signals and/or parameters to form the reference signal. Thus the noise contributions of a plurality of devices can be taken into account by simply providing a summing means to the filtering unit.

The invention with its features and advantages will be described in detail in the following using embodiments illustrated in the appended Figures.
- Figure 1a: illustrates an electronic device,
- Figure 1b: illustrates schematically the various components of the electronic device,
- Figure 2: schematically illustrates a first embodiment of an electronic device according to the invention,
- Figure 3: schematically illustrates a second embodiment of an electronic device according to the invention,
- Figure 4: schematically illustrates a third embodiment of an electronic device according to the invention,
- Figure 5: illustrates a filtering unit which can be used in any one of the first to third embodiments.

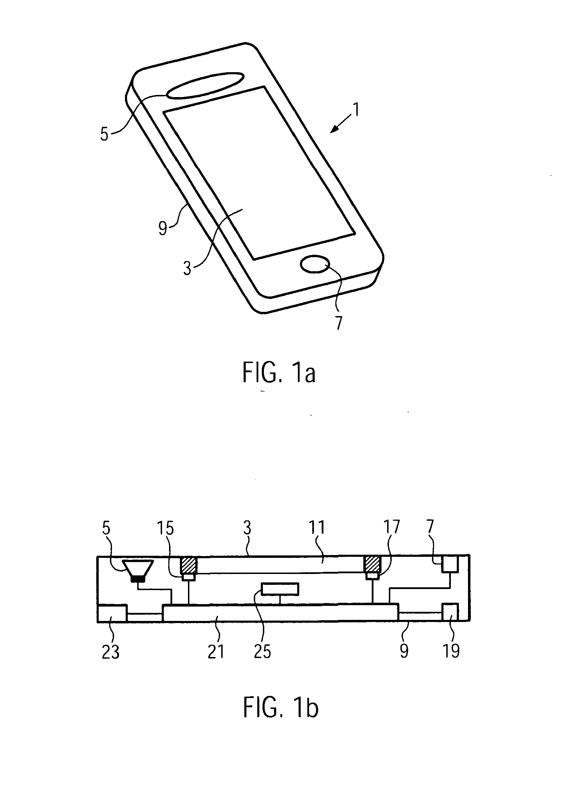

Figure 1 a illustrates an electronic device 1, here a mobile telephone, with a housing 9 comprising a touch sensitive surface 3, a loud speaker 5 and a microphone 7. Inside the housing 9, the electronic device 1 further comprises a plurality of components as illustrated in Figure 1 b. Underneath the touch sensitive surface 3, the electronic device 1 comprises a display 11 with a region 13 under which/or within which first and second sensing means 15 and 17 are attached. These sensing means 15 and 17, for instance piezoelectric transducers, accelerometers, microphones etc., capture acoustic signals generated as a consequence of a touch event on the touch sensitive surface 3 which leads to the formation of bending waves travelling through the surface of the interaction surface. Based on the captured signals, the location of the touch event can be determined using for instance the method as described in WO 2006/108443. A touch event typically relates to any kind of contact like a tap or taps, like a single touch or a multi-touch, on the surface and/or a sliding action over the surface and/or a hold action.

Here two sensing means 15 and 17 are illustrated, however, without departing from the scope of the invention, more or less sensing means can be provided, which also depends on the accuracy one is looking for.

Inside the housing 9, the electronic device furthermore comprises the loud speaker 5, the microphone 7 but also a vibrating device 19 which is used to provide a vibrating signal in addition to a ring tone to alert a user of an incoming call. The elements are connected to an IC board 21 comprising the electronic components for treating the various signals. Figure 1b further illustrates schematically the presence of a power supply 23. Additional components such as a hard disk drive, an accelerometer, a ventilator etc could also be provided in the electronic device, but are not illustrated in Figure 1 b.

The mobile telephone only represents one example of an electronic device to which the invention can be applied. The electronic device could also be a computer, a game console, an eBook, an MP3 player, a video player, a HiFi player or a navigation device. The electronic device can be a handheld or a desktop device.

Like already mentioned, the electronic device ensures the touch sensitive functionality using an acoustic technology. The signals captured by the touch sensing means 15 and 17 based on which the location of a touch event can be determined, do, however, not only carry the information of the touch event, but also carry spurious contributions in the frequency range used for the localization, which is typically in the range from 0 to 20kHz (audio range) but can be extended up to 100 kHz. These spurious contributions reduce the quality of the signal and a correct localisation of a touch event becomes more difficult or even impossible.

The invention thus aims at improving this situation by improving the signal-to-noise ratio of the acoustic signals captured by the sensing means 15 and 17. To do so, the invention takes advantage of the fact that the electronic device 1, as illustrated in Figure 1a, itself already comprises a number of components, which can provide information that is correlated with the noise pollution picked up by the sensing means 15 and 17. This information already present in any electronic device of the type described above, can thus be used to provide a noise reference used to filtered signals captured by the sensing means 15 and 17.

In detail:
- In the electronic device 1, illustrated in Figures 1a and 1b, the signal driving the loud speaker 5 is one source of information that can be used to remove noise due to the output of the loud speaker.
- But also, electromagnetic and electric noise generated by the power supply 23 or the electronic components of the IC board 21 could be analysed upfront and parameters, such as frequency ranges and corresponding amplitudes, be determined which strongly correlate to the noise contribution by these components to the signals captured by the sensing means 15 and 17.
- The noise coming from a vibrating device 19 can also be filtered out, as the vibrating frequency of the device is typically known. The filtering means can be tuned to this frequency to be able to reduce the noise contribution of the vibrating device 19. Other kinds of vibrations could, for instance, be generated by the spinning hard disc drive or the accelerometers, in case such a component is present in the electronic device.
- Further, the acoustic noise surrounding the electronic device, including any utterances provided by the user of the electronic device 1, can be captured by the microphone 7, which therefore is capable of providing a signal that can be used to reduce the contribution of that noise to the signals captured by the sensing means 15 and 17.

Thus, the invention provides a special filtering unit 25 that is configured to improve the signal-to-noise ratio of the acoustic signal captured by the sensing means 15 and 17 using the signals or known parameters provided by components already present in the electronic device 1. Here the loud speaker 5, the microphone 7, the vibrating device 19, the electronic components of the IC board 21 and the power supply 23 can also be called spurious acoustic signal generating devices, the term used in the claims.

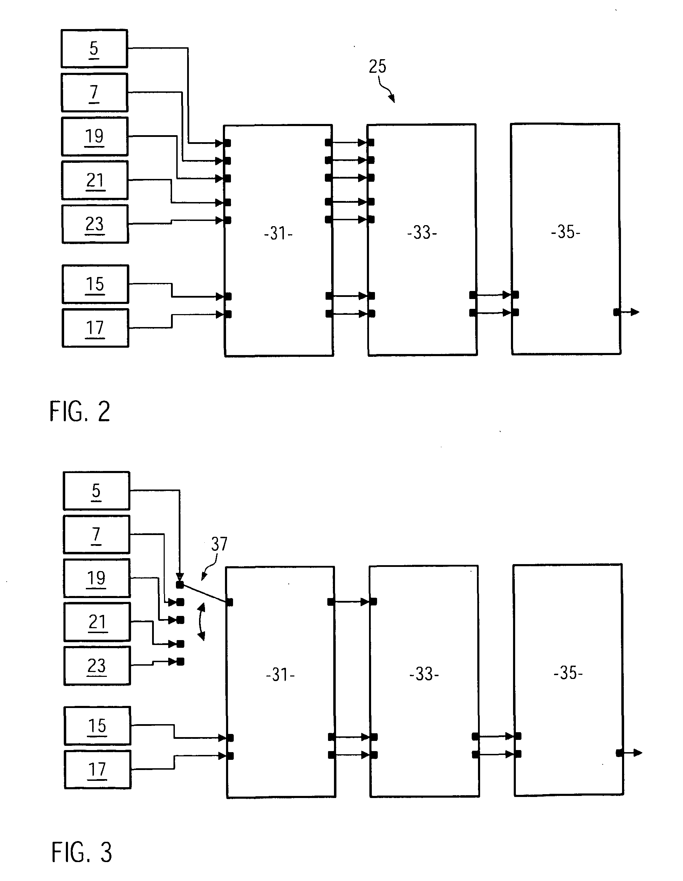

Figure 2 illustrates a first embodiment of such a filtering unit 25. The signals or parameter values of the spurious acoustic signal generating devices 5, 7, 19, 21 and 23, as well as the signals captured by the sensing means 15 and 17, are input into an acquisition device 31 configured, amongst others, to convert analogue input signals into digital signals.

The signals or parameter values provided by the spurious acoustic signal generating devices then serve as reference signals input into a filtering device 33 of the filtering unit 25. They are used to filter out, at least partially, spurious contributions to the acoustic signals captured by the sensing means 15 and 17 and which are also input into the filtering device 33.

The filtering device 33 is then configured to provide at its output, acoustic signals from which noise contributions have been at least partially removed. These acoustic signals with improved signal to noise ratio are then input into a touch location determining unit 35 which is configured to identify a touch event and its location on the touch sensitive surface 3 based on the improved acoustic signals.

According to a variant of the invention, the filtering device 33 and the a touch location determining unit 35 are incorporated into one IC chip of the IC board 21.

Figure 3 illustrates a second embodiment of the invention. The only difference with respect to the first embodiment is that the acquisition device 31 only receives one signal or parameter from a spurious acoustic signal generating device 5, 7, 19, 21, 23 at a time. This design simplifies the acquisition device 31.

A switching means 37 is provided which allows changing the source of the reference signal used for filtering the acoustic signals provided by sensing means 15 and 17 in the filtering means unit 33 so that, for instance, the most important noise contributor of the spurious acoustic signal generating devices can input its signal into the filtering unit 33. The switching means 37 can be either an automatic or a manual switch which can be used by a user.

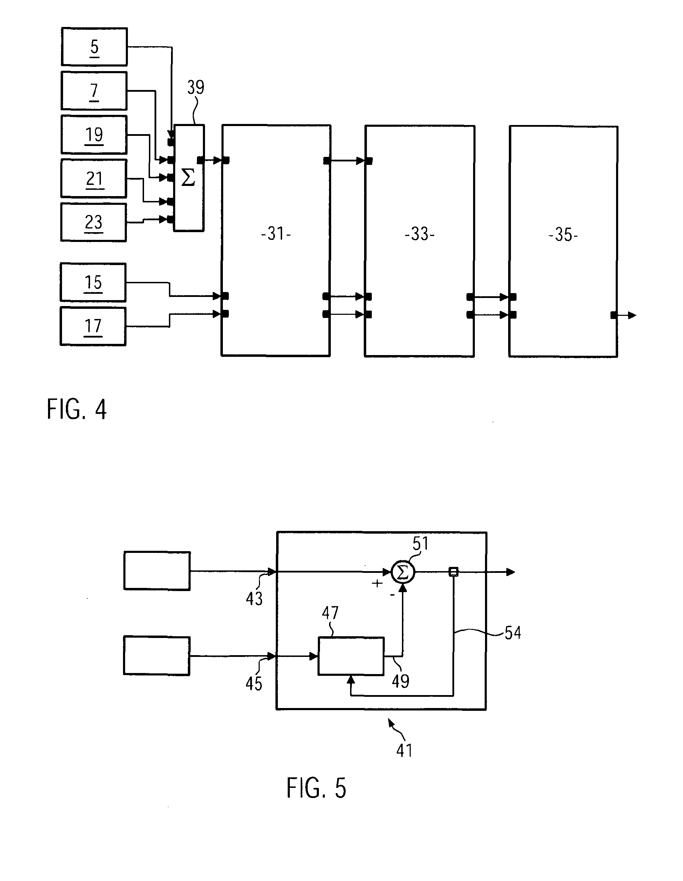

Figure 4 illustrates a third embodiment in which, compared to the first embodiment, again only one reference signal is provided to the filtering unit 33, however, in contrast to the second embodiment, a summing means 39 is provided between the spurious acoustic signal generating devices 5, 7, 19, 21, 23 and the acquisition device 31, so that actually all noise contributors are taken into account without, however, having to provide the plurality of acquisition lines and a plurality of reference signals to the filtering unit which keeps the overall design simpler compared to the first embodiment.

Figure 5 illustrates an example of an adaptive filtering unit 41 which can be used in any one of the first to third embodiments as filtering means 33.

Figure 5 illustrates an adaptive filtering unit 41 which adapts the filtering parameters or coefficients to changing characteristics of acoustic signals and reference signals in real time.. The adaptive filtering device 41 has an acoustic signal primary input 43 and a noise reference input 45. Of course, depending on the amount of sensing means 15 and 17, and the amount of reference signals used for the noise reduction, the amount of inputs can be adapted, accordingly.

The primary input 43 receives the signal of interest polluted by the noise contribution.

The reference signal, in turn, enters via the reference input 45 into an adaptive filter 47. The adaptive filter 47 adjusts its coefficients in order to minimize the value of the error signal 54 obtained at the summing knot 51 by subtracting the filtered reference signal provided at the filter output 49 to the acoustic signal input at the primary input 43. As long as the reference signal remains correlated to the noise contribution present in the acoustic signal input, the error signal 54 converge to the desired acoustic signal input.

Figure 5 only illustrates one possibility of a suitable filter unit 33, as actually any algorithms used in noise cancelling applications can be implemented. For instance, in case that the nature of the disturbing signal is actually known beforehand, like in the case of the known vibrating frequency of the vibrating device 19, an adaptive filter can be provided which does not need a reference signal as such. In the case of a strong periodic noise (vibrating device), an automatic notch filter can be used to reduce the spurious contribution from the acoustic signal. In this particular case, the reference signal can simply be a delayed version of the acoustic signal input. By adjusting this delay to the known period of the disturbance noise, this "virtual" reference signal is only correlated to the periodic noise present in the acoustic signal. This ensures the removal of the periodic disturbance from the desired acoustic signal by the adaptive filter.

## Claims

1. Electronic device with a touch sensitive surface comprising:
- a sensing means for capturing an acoustic signal
- a touch location determining unit configured to determine the location of an touch event on the touch sensitive surface based on the acoustic signal, **characterized in further comprising**
- a filtering unit configured to improve the signal-to-noise ratio of the acoustic signal based on one or more reference signals provided by one or more spurious acoustic signal generating devices of the electronic device and/or based on one or more parameters of the one or more spurious acoustic signal generating devices of the electronic device.

2. Electronic device according to claim 1, wherein the filtering unit comprises an adaptive filtering unit.

3. Electronic device according to claim 1 or 2, further comprising a switching means configured to switch between the reference signals and/or parameters provided by the spurious acoustic signal generating devices to provide one signal to the filtering unit.

4. Electronic device according to one of claims 1 to 3, further comprising a summing means configured to sum up at least two of the reference signals of the spurious acoustic signal generating devices and/or parameters.

5. Electronic device according to one of claims 1 to 4, wherein the one or more parameter is at least one of frequency range and associated amplitude.

6. Electronic device according to one of claims 1 to 5, wherein the one or more spurious acoustic signal generating device is at least one of a loudspeaker, a microphone, a vibrating device, an accelerometer, a hard disk drive, a ventilator, power supply and an electronic component.

7. Electronic device according to one of claims 1 to 6, wherein the electronic device is at least one of a mobile phone, a computer, a game console, an eBook, a MP3 player, a video player, a HiFi player and a navigation device.

8. Electronic device according to one of claims 1 to 7, wherein the electronic device is a handheld device.

9. Integrated Chip set comprising a filtering unit and touch localisation unit for use in the Electronic device according to one of claims 1 to 8.

10. Method for improving the signal-to-noise ratio of an acoustic signal used in an Electronic device to determine the location of a touch event, on a touch sensitive surface, comprising the steps of:
a. capturing an acoustic signal,
b. determining the location of a touch event, in particular a tap or a sliding action, on the touch sensitive surface based on the captured acoustic signal, **characterized in further comprising**
c. providing prior to step b. one or more spurious acoustic signal generating devices of the electronic device and/or based on one or more parameters of the one or more spurious acoustic signal generating devices of the electronic device to improve the signal-to-noise ratio of the acoustic signal.

11. Method according to claim 10, wherein step c comprises providing a noise reference signal using one or more signals of the one or more spurious acoustic signal generating devices of the electronic device and/or using one or more of the one or more parameters of the one or more spurious acoustic signal generating devices of the electronic device and inputting the noise reference signal into a reference input of an adaptive filtering unit to reduce the noise contribution to the captured acoustic signal.

12. Method according to claim 10 or 11, wherein step c further comprises using only one signal or parameter using a switching means.

13. Method according to one of claims 10 to 12, wherein step c further comprises summing up at least two of the signals and/or parameters to form the reference signal.
